(19) **Europäisches Patentamt**
**European Patent Office**
**Office européen des brevets**

(11) **EP 1 607 263 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
***B60K 26/02*** *(2006.01)*

(21) Anmeldenummer: 05103749.7

(22) Anmeldetag: **04.05.2005**

(54) **Verfahren und Vorrichtung zur Einstellung der auf eine Fahrpedaleinrichtung wirkenden Rückstellkraft**

Method and device for adjusting the force acting on a drive pedal

Procédé et dispositif pour contrôler la force exercée sur une pédale

(84) Benannte Vertragsstaaten:
**DE FR GB IT**

(30) Priorität: **17.06.2004 DE 102004029371**

(43) Veröffentlichungstag der Anmeldung:
**21.12.2005 Patentblatt 2005/51**

(73) Patentinhaber: **ROBERT BOSCH GMBH**
**70442 Stuttgart (DE)**

(72) Erfinder:
• **Kustosch, Mario**
**71665, Vaihingen/Enz (DE)**
• **Grill, Michael**
**70569, Stuttgart (DE)**

(56) Entgegenhaltungen:
**EP-A- 1 346 892     EP-A- 1 538 018**
**US-A- 5 627 752**

## Beschreibung

Die vorliegende Erfindung betrifft ein Verfahren und eine zugehörige Vorrichtung zur Einstellung der auf eine Fahrpedaleinrichtung eines Kraftfahrzeugs wirkenden Rückstellkraft, die dem Fahrer eine unökonomische Fahrweise signalisiert, indem in Abhängigkeit von Eingangsgrößen die momentane Schubkraft des Fahrzeugs bei abgeschalteter Kraftstoffzufuhr ermittelt wird und in Abhängigkeit dieser Schubkraft bestimmt wird, ob eine weitere Betätigung des Fahrpedals unökonomisch ist und eine auf das Fahrpedal wirkende Rückstellkraft aufgebaut werden soll.

Stand der Technik

Aus der DE 196 20 929 A1 ist ein Längsregelsystem für Kraftfahrzeuge mit haptischem Gaspedal bekannt, das einen Geschwindigkeitsgeber, einen Abstandsgeber, einen Längsregler und ein Einstellelement zur Aufbringung einer Rücksteuerkraft an einem Leistungssteuerorgan aufweist. Um eine parallel Längsregelung des Fahrzeugs durch den Fahrer und ein Längsregelsystem zu ermöglichen, steuert der Längsregler das Einstellelement derart an, dass bei einer Überschreitung eines Vorgabewertes des Längsreglers eine der Abweichung proportionale Rückstellkraft erzeugt wird.

Aus der EP 1346 892 A1 sind ein Verfahren und ein System zur Fahrerunterstützung eines Kraftfahrzeugs mit Bremsensteuerung bekannt, wobei die Fahreraktivität, die Fahrzeugbewegung und die Fahrzeugumgebung erkannt und bewertet werden. Basierend auf dieser Bewertung wird der Fahrer aufgefordert, die Fahreraktion zu verändern, indem ein Bremsmoment auf das Kraftfahrzeug aufgebracht wird und zusätzlich eine Reaktionskraft auf das Gaspedal aufgebracht wird.

Aus der US 5,627,752 ist eine verbrauchsorientierte Fahrleistungsbegrenzung eines Fahrzeugantriebs bekannt, wobei der Fahrer bei der optimalen Ausnutzung des mitgeführten Energievorrats unterstützt wird, indem vom jeweils vorhandenen Energievorrat laufend ein auf die Restdistanz bezogener zulässiger Streckenverbrauch ermittelt wird, aus dem unter Berücksichtigung der Fahrwiderstände ein Vorgabewert bestimmt wird, der eine Vorrichtung zur Fahrleistungsbegrenzung ansteuert.

Die nachveröffentlichte EP-A-1 538 018 zeigt ein Verfahren und eine Vorrichtung zur Einstellung der auf ein Fahrpedal wirkenden Rückstellkraft. Ziel ist die Vermeidung einer unökonomischen Fahrweise. Die EP'018 sieht eine Energiebilanz vor.

Kern und Vorteile der Erfindung

Der Kern der vorliegenden Erfindung ist es, dem Fahrer eines Kraftfahrzeugs auf intuitive Art und Weise anzuzeigen, ob es im Rahmen einer kraftstoffsparenden Fahrweise sinnvoll ist, das Fahrpedal des Fahrzeugs zu betätigen oder ob eine Betätigung des Fahrpedals eine nicht nutzbare Erhöhung des Kraftstoffverbrauchs darstellt. Erfindungsgemäß wird dieses durch die Merkmale der unabhängigen Ansprüche gelöst.

Vorteilhafte Weiterbildungen und Ausgestaltungen ergeben sich aus den Unteransprüchen.

Vorteilhafterweise wird die Rückstellkraft aktiviert, wenn die Schubkraft des Fahrzeugs ausreicht, um ohne weiteren Kraftstoffverbrauch ein, die eigene Fahrzeuggeschwindigkeit begrenzendes Objekt zu erreichen und das eigene Fahrzeug bei Erreichen dieses Objektes eine Fahrzeuggeschwindigkeit aufweist, die mindestens einer Zielgeschwindigkeit des Objektes entspricht.

Weiterhin ist es vorteilhaft, dass als Eingangsgrößen eine oder mehrere der Größen

- Abstand zu einem vorausbefindlichem Objekt,
- momentane Fahrzeuggeschwindigkeit,
- momentanes Getriebeübersetzungsverhältnis und/oder momentane Fahrbahnsteigung berücksichtigt werden.

Weiterhin ist es vorteilhaft, dass der Abstand zu einem vorausbefindlichen Objekt mittels einer Abstandsmessvorrichtung ermittelt wird, die als Radarsensor, als Lasersensor, als Ultraschallsensor, als Videosensor oder einer Kombination hieraus ausgeführt ist.

Weiterhin ist es vorteilhaft, dass die Fahrbahnsteigung mittels eines Navigationsgeräts ermittelt wird, das in Abhängigkeit der momentanen Aufenthaltsposition einen Fahrbahnsteigungswert bereitstellt.

Weiterhin ist es vorteilhaft, dass die Fahrbahnsteigung mittels zeitlicher Differenzierung der fahrdynamischen Gleichung ermittelt wird.

Weiterhin ist es vorteilhaft, dass eine weitere Betätigung des Fahrpedals unökonomisch ist, wenn die Schubkraft des Fahrzeugs ausreicht, um ohne weiteren Kraftstoffverbrauch ein, die eigene Fahrzeuggeschwindigkeit begrenzendes Objekt zu erreichen und dass das eigene Fahrzeug bei Erreichen dieses Objektes eine Fahrzeuggeschwindigkeit aufweist, die mindestens der Geschwindigkeit des Objektes entspricht.

Von besonderer Bedeutung ist die Realisierung des erfindungsgemäßen Verfahrens in der Form eines Steuerelements, das für ein Steuergerät einer adaptiven Abstands- und Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

Zeichnungen

Nachfolgen werden Ausführungsbeispiele der Erfindung anhand von Zeichnungen erläutert. Es zeigen

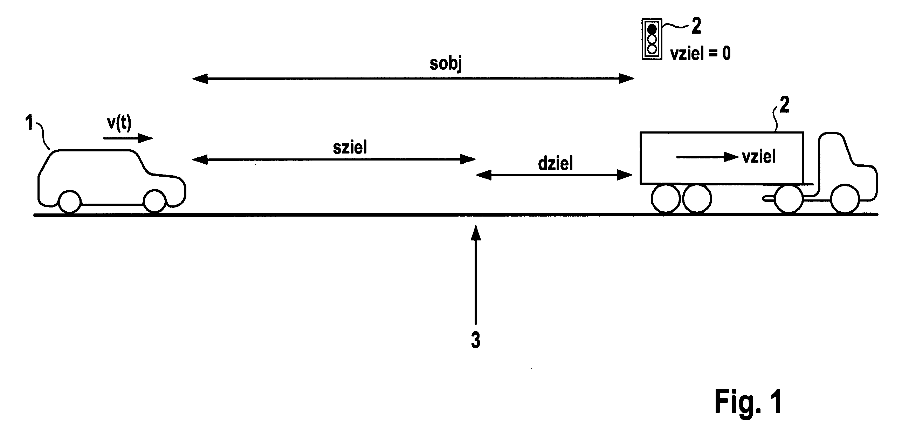

Figur 1    eine beispielhafte Verkehrssituation zur Verwendung der Erfindung,
Figur 2    ein Blockschaltbild einer Ausführungsform der erfindungsgemäßen Vorrichtung,
Figur 3    ein schematisches Blockschaltbild der Erfindung und
Figur 4    ein Ablaufdiagramm einer Ausführungsform des erfindungsgemäßen Verfahrens.

Beschreibung von Ausführungsbeispielen

In Figur ist das Fahrzeug 1 dargestellt, das erfindungsgemäß ein aktives Fahrpedal aufweist, das eine Rückstellkraft gegen den Druck des Fahrerfußes aufbringen kann, um dem Fahrer zu signalisieren, dass ein weiteres Gasgeben unökonomisch ist. Dieses Fahrzeug 1 bewegt sich mit der Geschwindigkeit v in Richtung geschwindigkeitsbegrenzender Objekte 2 fort. Dieses geschwindigkeitsbegrenzende Objekt 2 kann beispielsweise ein langsameres, vorherfahrendes Fahrzeug sein, das sich mit der Geschwindigkeit Vziel fortbewegt, oder kann auch ein ortsfestes Objekt sein, wie beispielsweise eine scharfe Fahrbahnkurve, die nur mit einer maximalen Geschwindigkeit Vziel durchfahren werden darf, oder eine Ampel sein, die, wenn diese ein rotes Licht anzeigt, eine Zielgeschwindigkeit Vziel = 0 repräsentiert. Das die Geschwindigkeit des eigenen Fahrzeugs beeinflussende Objekt 2 wird mittels einer Sensorik erkannt. Falls das Objekt 2 eine Verkehrsampel ist, wird eine Umfeldsensorik notwendig, die Videosignale erkennt. Weiterhin ist als Sensorik ein Navigationssystem möglich, das Informationen über bevorstehende Kurven und deren maximale Durchfahrtsgeschwindigkeit zur Verfügung stellt. Da ein Auffahren des eigenen Fahrzeugs 1 direkt auf das die geschwindigkeitsbegrenzende Objekt 2 nicht gewünscht ist, sondern da das eigene Fahrzeug 1 in einem Mindestabstand hinter dem Zielobjekt 2 folgen soll oder anhalten soll, wird ein Zielpunkt 3 bestimmt, der einen Mindestabstand dziel zwischen dem eigenen Fahrzeug 1 und dem Objekt 2 definiert. Dieser Zielpunkt 3 kann beispielsweise aus der Entfernung sobj des Objekts 2 zum Fahrzeug 1 bestimmt werden, indem von diesem Abstand sobj ein vom Fahrer oder vom Abstandsregelsystem vorgegebener Mindestabstand dziel subtrahiert wird, so dass der Zielpunkt 3 sich in der Entfernung sziel vor dem eigenen Fahrzeug 1 befindet. Erfindungsgemäß wird nun vorausberechnet, ob ein weiteres Gasgeben des Fahrers des Fahrzeugs 1 sinnvoll ist oder ob die Schubkraft des Fahrzeugs 1 auch ohne weiteres Gasgeben ausreicht, um sich dem die eigene Geschwindigkeit begrenzenden Objekt 2 bis auf den Mindestabstand dziel anzunähern und in diesem Zielpunkt 3 eine Fahrzeuggeschwindigkeit aufzuweisen, die der Zielgeschwindigkeit vziel entspricht, also dass im Zielpunkt 3 die Geschwindigkeit $v(t) = vziel$ ist. Der Zielpunkt 3 bewegt sich demnach mit der Bewegung des Zielobjekts 2 und des eigenen Fahrzeugs 1 ebenfalls fort.

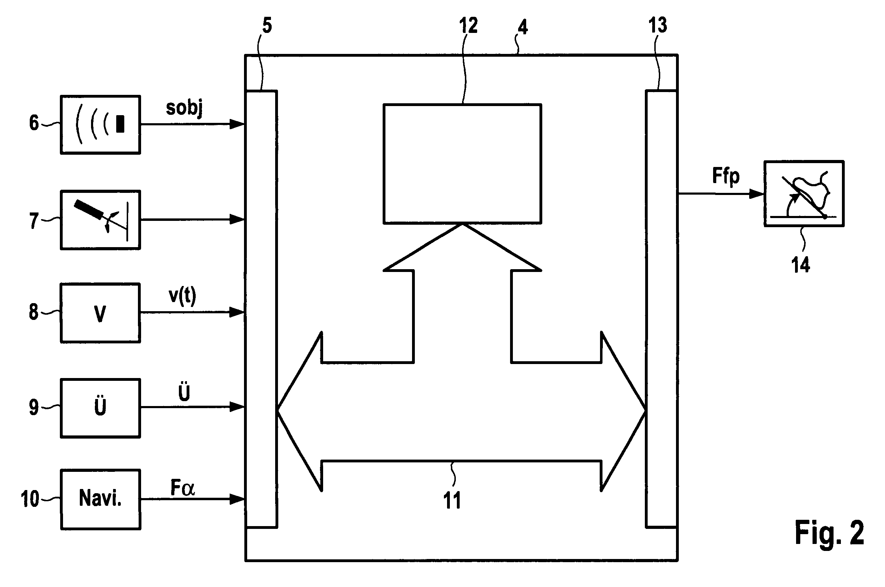

In Figur 2 ist eine Rückstellkraftermittlungseinrichtung 4 dargestellt, die aus Eingangsgrößen eine einzustellende Rückstellkraft auswertet und diese an nachgeordnete Stellglieder ausgibt. Hierzu ist die Auswerteeinrichtung 4 mit einer Eingangsschaltung 5 ausgestattet, mittels der die Eingangsgrößen der Auswerteeinrichtung 4 zuführbar sind. Als Eingangsgröße wird der Eingangsschaltung 5 beispielsweise der Abstand sobj zwischen dem eigenen Fahrzeug und dem vorausbefindlichen Zielobjekt 2 übermittelt, der von einem Abstandsmesssensor 6 zur Verfügung gestellt wird. Dieser Abstandssensor 6 kann beispielsweise ein Radarsensor, ein Lasersensor oder ein Ultraschallsensor sein, der mittels ausgesandter Strahlung und empfangener Strahlungsteilwellen, die an dem Objekt 2 reflektiert wurden, den Abstand sobj bestimmt. Weiterhin ist es möglich einen Videosensor zu verwenden, der durch Auswertung des erfassten Videobilds mittels Bildauswertealgorithmen den Abstand sobj zum vorausbefindlichen Objekt 2 bestimmen kann. Weiterhin ist der Eingangsschaltung 5 der Auswerteeinrichtung 4 eine Bedieneinrichtung 7 angeschlossen, mittels der die erfindungsgemäße Vorrichtung in Betrieb genommen oder ausgeschaltet werden kann, sowie Systemeinstellungen oder Komfortparameter des Systems verändert oder eingestellt werden können. Weiterhin wird der Eingangsschaltung 5 ein Geschwindigkeitssignal v(t) zugeführt, das mittels eines Geschwindigkeitssensors 8 ermittelt wird und die Geschwindigkeit des eigenen Fahrzeugs 1 repräsentiert. Weiterhin wird der Eingangsschaltung 5 ein Signal des Getriebes zugeführt, das von einem Übersetzungsverhältnissensor 9 bereitgestellt wird. Dieser Übersetzungsverhältnissensor 9, der beispielsweise auch innerhalb der Getriebesteuerung implementiert sein kann, stellt ein Signal Ü zur Verfügung, das das Übersetzungsverhältnis der momentan eingestellten Fahrstufe des Getriebes der Auswerteeinrichtung 4 zur Verfügung stellt. Zur Erreichung eines exakteren Ergebnisses ist es weiterhin möglich, ein Navigationsgerät 10 vorzusehen, das die Position des eigenen Fahrzeugs 1 bestimmt und diese mit einer Straßenkarte abgleicht, und bezüglich der momentan befahrenen Teilstrecke eine Fahrbahnsteigung F$\alpha$ ermittelt und der Auswerteeinrichtung 4 zuführt. Alternativ ist es auch möglich, die Fahrbahnsteigung F$\alpha$ nicht mittels eines Navigationsgerätes zur Verfügung zu stellen, sondern aus einer zeitlichen Differentiation der Gleichung der Fahrwiderstände herzuleiten, indem die tatsächliche Fahrzeugbeschleunigung in Weiterhin ist es möglich, einen Videosensor als Abstandsmesssensor 6 zu verwenden. Hierdurch können Verbots- oder Gebotsschilder und Verkehrsampeln als Zielobjekte 2 optisch erkannt werden. Diese Zielobjekte 2 besitzen eine weiterzuverarbeitende Zielgeschwindigkeit vziel, die im Fall einer Rotlicht-Ampel eine Zielgeschwindigkeit vziel = 0 aufweist oder im Fall eines Geschwindigkeitsbegrenzungsschilds den auf dem Schild aufgedruckten Geschwindigkeitsbegrenzungswert als Zielgeschwindigkeit vziel aufweist. Abhängigkeit der angeforderten Fahrzeugsollbeschleunigung oder des angeforderten Fahrzeugmomentes differenziert wird und nach der Fahrbahnsteigung aufgelöst wird. Ein derartiges Vorgehen ist beispielsweise dem kraftfahrtechnischen Taschenbuch (ISBN 3-540-62219-5) oder einem anderen, einschlägigen Fachbuch entnehmbar und stellt für den Fachmann keine Schwierigkeit dar. Die Eingangsdaten, die der Eingangsschaltung 5 der Auswerteeinrichtung 4 zugeführt wurden, werden mittels einer Datenaustauscheinrichtung 11 an eine Berechnungseinrichtung 12 weitergeleitet, in der aus diesen Eingangsgrößen Stellgrößen für nachgeordnete Stellglieder berechnet werden. Hierzu wird in der Berechnungseinrichtung 12 das erfindungsgemäße Verfahren durchgeführt, indem in Abhängigkeit der Eingangsgrößen, wie später erläutert wird, ein Stellsignal für ein aktives Fahrpedalmodul 13 generiert wird. Dieses Ausgangssignal wird von der Berechnungseinrichtung 12 mittels der Datenaustauscheinrichtung 11 an eine Ausgangsschaltung 13 ausgegeben, die das die Rückstellkraft repräsentierende Signal Ffp an das nachgeordnete aktive Fahrpedal 14 ausgibt.

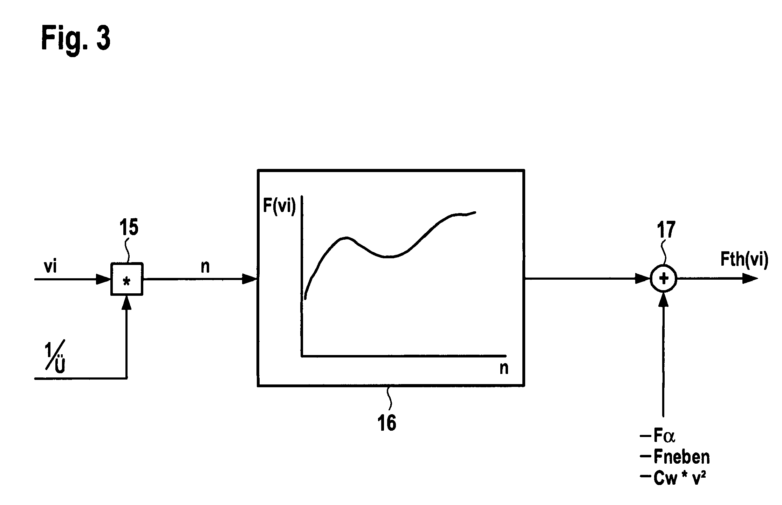

In Figur 3 ist dargestellt, auf welche Weise die Schubkraft Fth des Fahrzeugs bei abgeschalteter Kraftstoffzufuhr ermittelt wird. Hierzu wird die Fahrzeuggeschwindigkeit v, die der Auswerteeinrichtung 4 vom Geschwindigkeitssensor 8 zur Verfügung gestellt wird, herangezogen sowie das Übersetzungsverhältnis Ü der momentan gewählten Getriebestufe, die von dem Getriebeübersetzungssensor 9 bereitgestellt wird. Die Getriebeübersetzung Ü wird hierbei als Kehrwert 1/Ü verwendet und in Block 15 mit der Fahrzeuggeschwindigkeit v multipliziert, so dass das Ausgangssignal des Block 15 ein die Drehzahl n der Brennkraftmaschine repräsentierendes Signal ist. Mittels der Drehzahl n wird anschließend die Motorschleppmoment-Drehzahl-Kennlinie 16 adressiert, die das Schleppmoment des Motors im unbefeuerten Zustand, also ohne Kraftstoffeinspritzung, repräsentiert. Diese Kennlinie kann beispielsweise auf einem Prüfstand ermittelt und das Kennlinienfeld anschließend in Block 16 als Tabelle oder Funktion hinterlegt werden. Aus dieser Motorschleppmoment(F(v))-Drehzahl(n)-Kennlinie 16 ergibt sich das momentane Schleppmoment des Motors, das von der Drehzahl n abhängig ist, das einem Summierer 17 zugeführt wird. Als weiteres Eingangssignal wird dem Summierer 17 der Momentenbedarf der Nebenaggregate Fneben zugeführt, sowie der Fahrwiderstand F$\alpha$ infolge einer Fahrbahnsteigung. Ebenfalls kann dem Summierer 17 der momentane Luftwiderstandswert zugeführt werden, der sich aus dem Luftwiderstandsbeiwert Cw und dem Quadrat der momentanen Fahrzeuggeschwindigkeit v zusammensetzt. Die dem Summierer 17 zugeführten Größen F$\alpha$, Fneben sowie Cw*v$^2$ sind hierbei mit negativem Vorzeichen zu berücksichtigen, so dass am Ausgang des Summierers 17 ein die Schubkraft Fth(v) des Fahrzeugs repräsentierendes Signals abgegriffen werden kann, das in Abhängigkeit der Geschwindigkeit veränderlich ist. Aus diesen Werten kann im nachfolgend beschriebenen Verfahren mittels einer iterativen Aufintegration die Reichweite der momentanen Schubkraft berechnet werden, in deren Abhängigkeit die Rückstellkraft Ffp des Fahrpedals einstellbar ist.

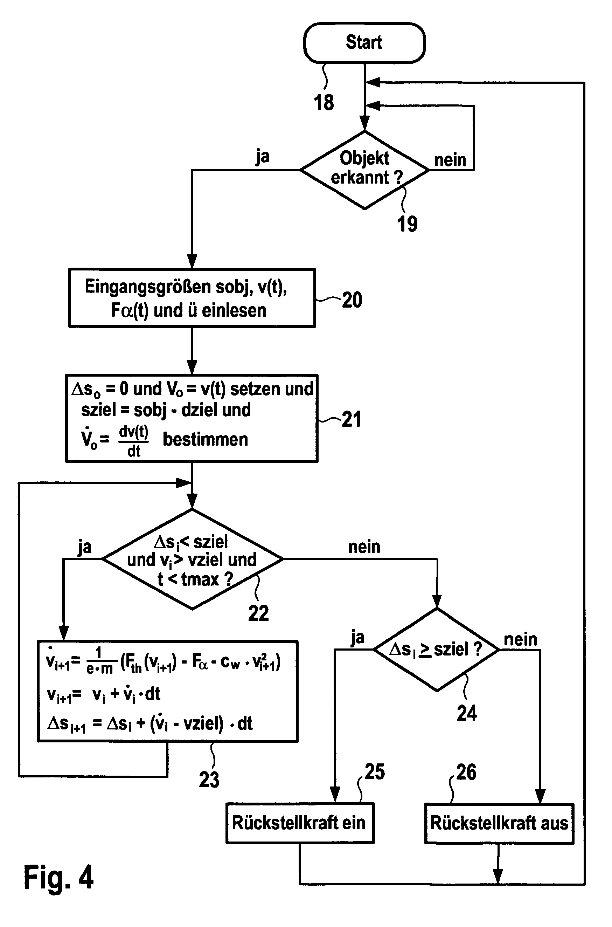

In Figur 4 ist ein Ausführungsbeispiel des erfindungsgemäßen Verfahrens dargestellt, das in Schritt 18 bei Start beginnt. Danach wird in Schritt 19 geprüft, ob ein vorausbefindliches, die eigene Fahrzeuggeschwindigkeit begrenzendes Objekt 2 erkannt wurde. Wurde kein derartiges Objekt 2 erkannt, so verzweigt Schritt 19 nach Nein und wird in Schritt 19 fortgeführt. Wurde ein Objekt 2 erkannt, so verzweigt Schritt 19 nach Ja und es werden die Eingangsgrößen Abstand sobj, die momentane Fahrzeuggeschwindigkeit v(t) und das momentane Getriebeübersetzungsverhältnis Ü eingelesen, sowie der Fahrwiderstand F$\alpha$(t) infolge der Fahrbahnsteigung in Schritt 20 ermittelt. Hierbei kann die Ermittlung des Fahrwiderstands F$\alpha$(t) beispielsweise mittels eines Navigationsgerätes erfolgen, das die momentane Fahrzeugposition bestimmt und in Abhängigkeit der Fahrzeugposition und einer Datenbank, in der Fahrbahnsteigungen hinterlegt sind, die momentane Fahrbahnsteigung bereitgestellt werden, aus der der Fahrwiderstand berechenbar ist. Anschließend werden in Schritt 21 die Werte $\Delta s_0$ und $V_0$ auf Eingangsgrößen gesetzt, indem $\Delta s_0 = 0$ und $V_0 = v(t)$ gesetzt werden. Weiterhin wird der Zielabstand sziel berechnet, indem der Abstand sobj und der Mindestabstand dziel voneinander subtrahiert werden. Weiterhin wird die momentane Beschleunigung $V_0$punkt bestimmt, indem die momentane Fahrzeuggeschwindigkeit v(t) nach der Zeit differenziert wird. Anschließen wird in Schritt 22 geprüft, ob $\Delta s_i < $ sziel, $v_i >$ vziel und gleichzeitig t<tmax ist. Sind alle drei Bedingungen in Schritt 22 erfüllt, so verzweigt das Diagramm nach Ja und es wird in Schritt 23 ein weiterer iterativer Integrationsschritt i durchgeführt und abermals in Schritt 22 die Bedingungen überprüft, ob eine weitere Integration erfolgen soll. Diese iterative Integrationsschleife, die aus den Schritten 22 und 23 gebildet wird, wird abgebrochen, wenn entweder $\Delta s > sziel$ ist, also die Schubkraft des Fahrzeugs bei abgeschalteter Kraftstoffeinspritzung größer ist als die Entfernung des Zielpunkts 3 zum Fahrzeug 1 und damit ein weiteres Gasgeben unökonomisch wäre. Weiterhin wird die Integrationsschleife abgebrochen, wenn $v_i <= vziel$ ist, d. h., dass die Fahrzeuggeschwindigkeit zum Integrationsschritt i bereits kleiner ist als die Zielgeschwindigkeit vziel, die bei Erreichen des Zielpunkts 3 im Abstand sziel zum Fahrzeug 1 gewünscht ist und damit ein weiteres Gasgeben möglich ist oder wenn die Zeit t größer wird als ein vorbestimmter maximaler Zeitwert tmax, so dass eine endlose Integration oder eine zulange dauernde Integration abgebrochen wird, da momentan keine sinnvolle Situationsbewertung möglich ist. Sind die Bedingungen nach Schritt 22 erfüllt, so wird in Schritt 23 eine Integration durchgeführt, indem die Beschleunigung $v_{i+1}$ nach der Gleichung

$$\frac{d}{dt} v_{i+1} = \frac{1}{e \cdot m} \left( F_{th}(v_{i+1}) - F_\alpha - C_w \cdot v_{i+1}^2 \right)$$

berechnet wird, indem weiterhin die Geschwindigkeit $v_{i+1}$ für den nächsten Schritt durch die Gleichung

$$v_{i+1} = v_i + \overset{\bullet}{v}_i \cdot dt$$

sowie die Reichweite

$$\Delta s_{i+1} = \Delta s_i + (\overset{\bullet}{v}_i - vziel) \cdot dt$$

berechnet werden.

Anschließend werden die Bedingungen nach Schritt 22 abermals überprüft. Wurde in Schritt 22 festgestellt, dass eine oder mehrere der Bedingungen nicht erfüllt sind, so ist eine weitere Integration nicht mehr notwendig und Schritt 22 verzweigt nach Schritt 24, in dem geprüft wird, ob die Reichweiter $\Delta s_i$ größer oder gleich dem Zielabstand sziel des Zielpunkts 3 zum eigenen Fahrzeug 1 ist. Ist die Reichweite geringer als der Abstand des Zielpunkts 3 zum eigenen Fahrzeug, so verzweigt Schritt 24 nach Nein und es wird in Schritt 26 die Rückstellkraft des aktiven Fahrpedals auf 0 gestellt, indem die Rückstellkraft ausgeschaltet wird. Wurde in Schritt 24 erkannt, dass die Reichweite des Fahrzeugs größer oder gleich dem Abstand des Zielpunkts 3 zum eigenen Fahrzeug 1 ist, so verzweigt Schritt 24 nach Ja und es wird in Schritt 25 eine Rückstellkraft, die auf das Fahrpedal wirkt, eingeschaltet und dem Fahrer hiermit signalisiert, dass ein weiteres Gasgeben ökonomisch nicht sinnvoll ist. Nach Einstellung der Rückstellkraft des aktiven Fahrpedals 14 in den Schritten 25 bzw. 26 springt das Verfahren zu Schritt 19 zurück und es wird abermals geprüft, ob ein Objekt erkannt ist.

**Patentansprüche**

1.   Verfahren zur Einstellung der auf eine Fahrpedaleinrichtung eines Kraftfahrzeugs (1) wirkenden Rückstellkraft, die dem Fahrer eine unökonomische Fahrweise signalisiert, indem in Abhängigkeit von Eingangsgrößen (sobj, v, ü, F$\alpha$) die momentane Schubkraft (Fth)des Fahrzeugs bei abgeschalteter Kraftstoffzufuhr ermittelt wird und in Abhängigkeit dieser Schubkraft (Fth) bestimmt wird, ob eine weitere Betätigung des Fahrpedals unökonomisch ist und eine auf das Fahrpedal wirkende Rückstellkraft (14) aufgebaut wird.

2.   Verfahren nach Anspruch 1, **dadurch gekennzeichnet, dass** die Rückstellkraft (14) aktiviert wird, wenn die Schubkraft (Fth) des Fahrzeugs ausreicht, um ohne weiteren Kraftstoffverbrauch ein die eigene Fahrzeuggeschwindigkeit (v) begrenzendes Objekt (2) zu erreichen und das eigene Fahrzeug (1) bei Erreichen dieses Objektes (2) eine Fahrzeuggeschwindigkeit (v) aufweist, die mindestens einer Zielgeschwindigkeit des Objektes entspricht (vziel).

3.   Verfahren nach Anspruch 1 oder 2, **dadurch gekennzeichnet, dass** als Eingangsgrößen eine oder mehrere der Größen

   - Abstand (sobj) zu einem vorausbefindlichen Objekt,

- momentane Fahrzeuggeschwindigkeit (v),
- momentanes Getriebeübersetzungsverhältnis (ü) und/oder
- momentane Fahrbahnsteigung (F$\alpha$)

berücksichtigt werden.

4. Verfahren nach einem der vorhergehenden Ansprüche, **dadurch gekennzeichnet, dass** der Abstand (sobj) zu einem vorausbefindlichen Objekt mittels einer Abstandsmessvorrichtung (6) ermittelt wird, die als Radarsensor, als Lasersensor, als Ultraschallsensor, als Videosensor oder einer Kombination hieraus ausgeführt ist.

5. Verfahren nach einem der vorhergehenden Ansprüche, **dadurch gekennzeichnet, dass** die Fahrbahnsteigung (F$\alpha$) mittels eines Navigationsgeräts (10) ermittelt wird, das in Abhängigkeit der momentanen Aufenthaltsposition einen Fahrbahnsteigungswert (F$\alpha$) bereitstellt.

6. Verfahren nach einem der Ansprüche 1 bis 4, **dadurch gekennzeichnet, dass** die Fahrbahnsteigung (F$\alpha$) mittels zeitlicher Differentiation der fahrdynamischen Gleichung ermittelt wird.

7. Vorrichtung zur Einstellung der auf eine Fahrpedaleinrichtung eines Kraftfahrzeugs wirkenden Rückstellkraft (14), die dem Fahrer eine unökonomische Fahrweise signalisiert, indem einer Rückstellkraftermittlungseinrichtung (4) Eingangsgrößen (sobj, v, ü, F$\alpha$) zuführbar sind, die Rückstellkraftermittlungseinrichtung (4) die momentane Schubkraft (Fth) des Fahrzeugs (1) bei abgeschalteter Kraftstoffzufuhr ermittelt und eine auf das Fahrpedal wirkende Rückstellkraft (Ffp) aufgebaut wird, wenn in Abhängigkeit dieser Schubkraft (Fth) bestimmt wird, dass eine weitere Betätigung des Fahrpedals unökonomisch ist.

8. Vorrichtung nach Anspruch 7, **dadurch gekennzeichnet, dass** eine weitere Betätigung des Fahrpedals unökonomisch ist, wenn die Schubkraft (Fth) des Fahrzeugs (1) ausreicht, um ohne weiteren Kraftstoffverbrauch ein die eigene Fahrzeuggeschwindigkeit (v) begrenzendes Objekt (2) zu erreichen und das eigene Fahrzeug (1) bei Erreichen dieses Objektes eine Fahrzeuggeschwindigkeit (v) aufweist, die mindestens der Geschwindigkeit (vziel) des Objektes entspricht.

## Claims

1. Method for setting the restoring force which acts on an accelerator pedal device of a motor vehicle (1), which restoring force indicates an uneconomical driving style to the driver by the instantaneous advancing force (Fth) of the vehicle being detected as a function of input variables (sobj, v, ü, F$\alpha$) when the fuel supply is switched off, and it being determined as a function of this advancing force (Fth) whether further operation of the accelerator pedal is uneconomical, and a restoring force (14) which acts on the accelerator pedal being built up.

2. Method according to Claim 1, **characterized in that** the restoring force (14) is activated when the advancing force (Fth) of the vehicle is sufficient to reach an object (2) which limits the speed (v) of the vehicle in question without further fuel consumption, and, when it reaches this object (2), the vehicle (1) in question has a vehicle speed (v) which corresponds at least to a target speed of the object (vtarget).

3. Method according to Claim 1 or 2, **characterized in that** the input variables taken into consideration are one or more of the following variables

   - distance (sobj) from a object which is located ahead,
   - instantaneous vehicle speed (v),
   - instantaneous gearbox transmission ratio (ü) and/or
   - instantaneous carriageway gradient (F$\alpha$).

4. Method according to one of the preceding claims, **characterized in that** the distance (sobj) from an object which is located ahead is detected by means of a distance-measuring apparatus (6) which is designed as a radar sensor, as a laser sensor, as an ultrasound sensor, as a video sensor or a combination of the above.

5. Method according to one of the preceding claims, **characterized in that** the carriageway gradient (F$\alpha$) is detected by means of a navigation unit (10) which provides a carriageway gradient value (F$\alpha$) as a function of the instantaneous holding position.

**6.** Method according to one of Claims 1 to 4, **characterized in that** the carriageway position (Fα) is detected by means of differentiation of the driving-dynamics equation with respect to time.

**7.** Apparatus for setting the restoring force (14) which acts on an accelerator pedal device of a motor vehicle, which restoring force indicates an uneconomical driving style to the driver by it being possible to supply a restoring force-detecting device (4) with supply input variables (sobj, v, ü, Fα), which restoring force-detecting device (4) detects the instantaneous advancing force (Fth) of the vehicle (1) when the fuel supply is switched off, and a restoring force (Ffp) which acts on the accelerator pedal being built up when it is determined as a function of this advancing force (Fth) that further operation of the accelerator pedal is uneconomical.

**8.** Apparatus according to Claim 7, **characterized in that** further operation of the accelerator pedal is uneconomical when the advancing force (Fth) of the vehicle (1) is sufficient to reach an object (2) which limits the speed (v) of the vehicle in question without further fuel consumption and, when it reaches this object, the vehicle (1) in question has a vehicle speed (v) which corresponds at least to the speed (vtarget) of the object.

## Revendications

**1.** Procédé d'ajustement de la force de rappel agissant sur une pédale d'accélérateur d'un véhicule automobile (1) qui signale au conducteur un mode de conduite non économique, en déterminant la poussée (Fth) momentanée du véhicule lorsque l'alimentation en carburant est désactivée, en fonction de grandeurs d'entrée (sobj, v, ü, Fα), et, en fonction de cette poussée (Fth), on détermine si un autre actionnement de la pédale d'accélérateur n'est pas économique et on crée une force de rappel (14) agissant sur la pédale d'accélérateur.

**2.** Procédé selon la revendication 1,
**caractérisé en ce que**
la force de rappel (14) est activée lorsque la poussée (Fth) du véhicule est suffisante pour atteindre un objet (2) limitant la vitesse propre (v) du véhicule sans consommer d'autre carburant et lorsque le véhicule (1) présente, lorsque cet objet (2) est atteint, une vitesse (v) qui correspond au moins à une vitesse cible de l'objet (vziel).

**3.** Procédé selon la revendication 1 ou la revendication 2,
**caractérisé en ce que**
comme grandeurs d'entrée, on tient compte, d'une ou plusieurs des grandeurs suivantes :

- distance (sobj) par rapport à un objet se trouvant devant,
- vitesse du moment (v) du véhicule,
- rapport de démultiplication (ü) du moment et/ ou
- pente momentanée de la chaussée (Fα).

**4.** Procédé selon l'une quelconque des revendications précédentes,
**caractérisé en ce que**
la distance (sobj) par rapport à un objet se trouvant devant est déterminée au moyen d'un dispositif de télémétrie (6) sous forme de détecteur radar, de détecteur laser, de capteur d'ultrasons, de détecteur vidéo ou d'une combinaison de ceux-ci.

**5.** Procédé selon l'une quelconque des revendications précédentes,
**caractérisé en ce que**
la pente de la chaussée (Fα) est déterminée au moyen d'un appareil de navigation (10) qui fournit une valeur de pente de la chaussée (Fα) en fonction de la localisation momentanée.

**6.** Procédé selon l'une quelconque des revendications 1 à 4,
**caractérisé en ce que**
la pente de la chaussée (Fα) est déterminée au moyen d'une différenciation dans le temps de l'équation de la dynamique de trajectoire.

**7.** Procédé d'ajustement de la force de rappel (14) agissant sur une pédale d'accélérateur d'un véhicule automobile (1) qui signale au conducteur un mode de conduite non économique, en acheminant vers un dispositif de détermination de la force de rappel (4) des grandeurs d'entrée (sobj, v, ü, Fx), en déterminant la poussée (Fth) momentanée du véhicule (1) lorsque l'alimentation en carburant est désactivée et en établissant une force de rappel (Ffp) agissant sur la pédale d'accélérateur si, en fonction de cette poussée (Fth), on détermine qu'un autre actionnement de la pédale d'accélérateur n'est pas économique.

8. Dispositif selon la revendication 7,
**caractérisé en ce qu'**
un autre actionnement de la pédale d'accélérateur n'est pas économique lorsque la poussée (Fth) du véhicule (1) est suffisante pour atteindre un objet (2) limitant la vitesse propre (v) du véhicule sans consommer d'autre carburant et lorsque le véhicule (1) présente, lorsque cet objet (2) est atteint, une vitesse (v) qui correspond à au moins la vitesse de l'objet (vziel).

Fig. 1

Fig. 2

**Fig. 3**

EP 1 607 263 B1

Start

18

Objekt erkannt ?

ja     nein

19

Eingangsgrößen sobj, v(t), Fα(t) und ü einlesen

20

$\Delta s_o = 0$ und $V_o = v(t)$ setzen und sziel = sobj - dziel und $\dot{V_o} = \dfrac{dv(t)}{dt}$ bestimmen

21

$\Delta s_i <$ sziel und $v_i >$ vziel und $t <$ tmax ?

ja     nein

22

$\dot{v}_{i+1} = \dfrac{1}{e \cdot m}\left(F_{th}\left(v_{i+1}\right) - F_\alpha - c_w \cdot v_{i+1}^2\right)$

$v_{i+1} = v_i + \dot{v_i} \cdot dt$

$\Delta s_{i+1} = \Delta s_i + \left(\dot{v_i} - vziel\right) \cdot dt$

23

$\Delta s_i \geq$ sziel ?

ja     nein

24

25     26

Rückstellkraft ein     Rückstellkraft aus

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19620929 A1
- EP 1346892 A1
- US 5627752 A
- EP 1538018 A